# EUROPEAN PATENT APPLICATION

(11) **EP 2 639 356 A1**
(43) Date of publication of application: **18.09.2013**
(21) Application number: 13156890.9
(22) Date of filing: 27.02.2013
(51) Int. Cl.: E02B 9/04

(54) **An improved hydraulic weir**

(30) Priority: 12.03.2012 IT MO20120062
(71) Applicant: E.P. di Provasi Elvino Ambientenergia, 41033 Concordia Sulla Secchia, Modena (IT)
(72) Inventor: Provasi, Elvino, 41033 Concordia Sulla Secchia, Modena (IT)
(74) Representative: Casadei, Giovanni

(57) **Abstract**

The invention relates to a hydraulic weir which comprises a structure (1), placed across a bed of a stream (2), the structure including a loading basin (4), for conveying water to a hydro-electric station downstream of the weir, provided with a protection grid (5) which prevents the passage of foreign bodies; a first variable-height element (6) is provided on the threshold (3) of the weir, a height of which element (6) with respect to the threshold of the weir is variable from a lower position (A) to an upper position . The loading basin comprises two fixed lateral walls (7a) and a second variable-height element (7), arranged on the downstream bank of the basin, the height of which with respect to the threshold of the weir is variable from a lower position (A') to an upper position (B'); also provided is a device for cleaning the grid of the basin.

## Description

The present invention relates to an improved hydraulic weir. The weir of the invention is used for increasing possibility of exploitation of the hydraulic energy of the water flowing in streams with the aim of producing electrical energy from small hydroelectric plants located downstream of the weir.

Weirs, or dams, are realised across a whole bed of a stream or a river having a prevalently torrential flow, with the aim of regulating the flow rate thereof or preventing removal of material from the stream bed. Both the profile and the threshold (or crest) of the weir are realized in such a way that in a case of a full stream the water continues to flow over the threshold of the weir and does not rise to a level that is such as to pass by the sides of the weir and flow beyond the banks of the weir itself, or in which in any case the situation does not lead to flooding the territories upstream of the weir.

Between the water level upstream and downstream of the weir a difference in level is formed (hydraulic head) which, should the difference be of a certain entity and, obviously, should the stream guarantee a certain flow of water at least for a majority of the year, can be exploited for the production of electrical energy by using small hydro-electric stations that are located downstream of the weir and which exploit the difference in level created by the weir.

For the exploitation of the hydraulic energy, a loading structure is usually realised at the weir, which can be a channel or a basin, through which all or part of the water flowing into the stream is conveyed to a hydraulic turbine present in the station downstream of the weir. Document DE 19907773 describes a weir, provided with a loading basin, of a type at present in use. Also known are variable-height mobile elements such as those illustrated in WO 97/08393.

Solid foreign bodies, such as stones, cobbles, shrubs and the like, which are normally transported downstream by the water, can enter the loading structure and reach the turbine, causing damage thereto; this must be prevented. For this purpose a protection grid is positioned at the start of the loading structure, which prevents passage of the foreign bodies. The foreign bodies which are halted by the grid cause a blocking of the grid itself and periodically have to be removed by grid-cleaning operations.

A grid of this type is illustrated in FR 1028681.

The main aim of the present invention is to provide improvements to be applied to the weirs of known type, which enable an increase in the exploitation possibilities of the hydraulic energy of streams for the production of electrical energy.

A further aim of the present invention is to provide improvements which can be applied to existing weirs rapidly and economically and without altering the hydraulic functioning thereof.

An advantage of the present invention is to enable a rapid and effective cleaning of the protection grids of the loading structures.

Further characteristics and advantages of the present invention will more fully emerge from the detailed description that follows of the weir of the invention illustrated by way of non-limiting example in the accompanying figures in which:

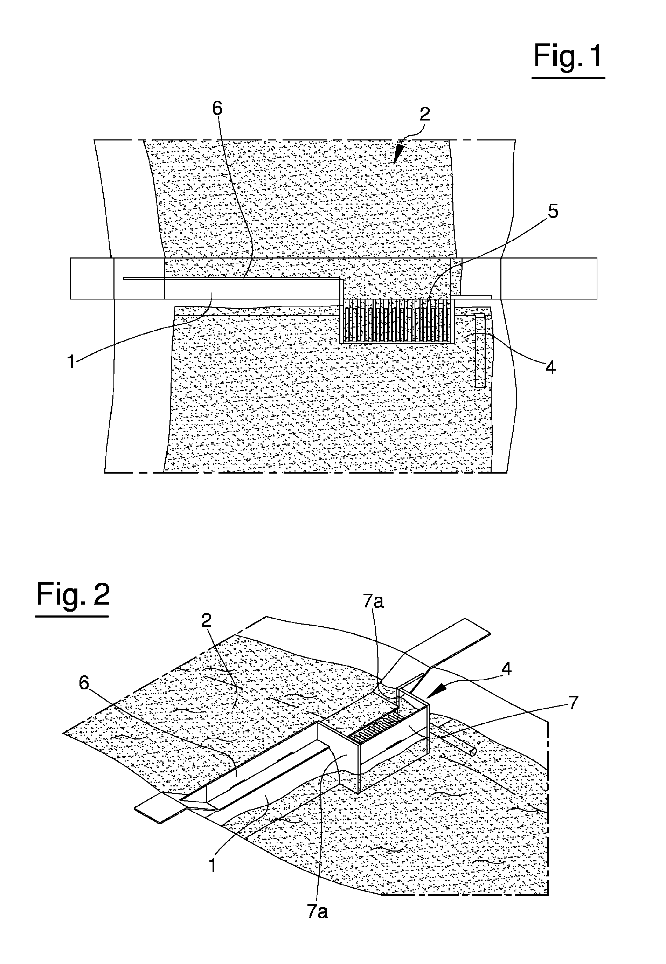

- figure 1 is a schematic view from above of a possible embodiment of the weir of the invention located on a bed of a stream;
- figure 2 is a view of a detail of figure 1 in larger scale;

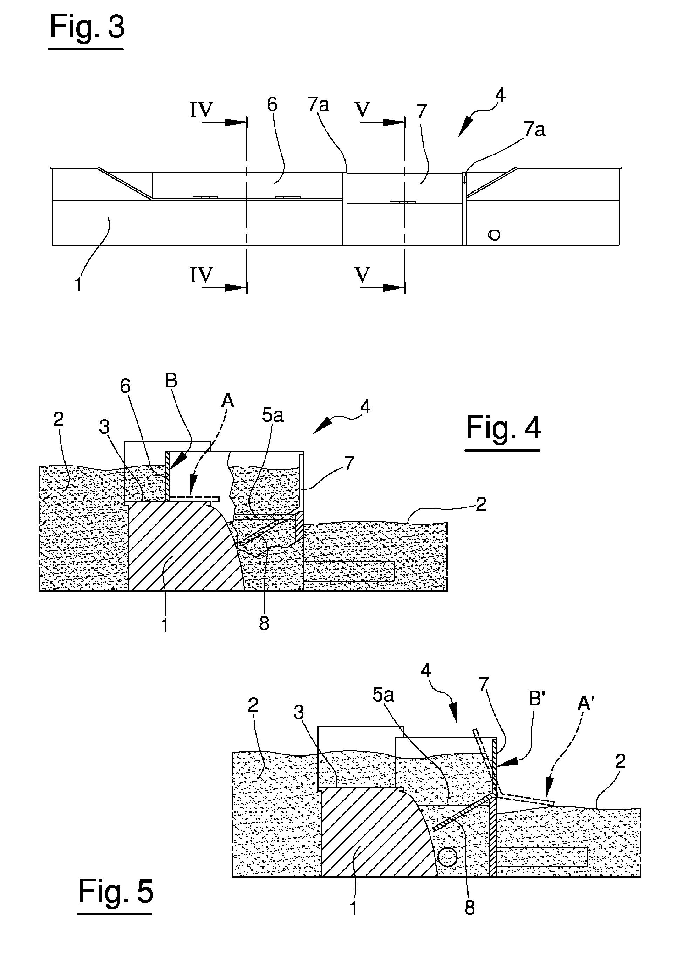

- figure 3 is a front view, from downstream, of the weir of the invention;
- figure 4 is a vertical-elevation section of the weir of the invention carried out along trace line IV-IV of figure 3, with the lower position of the first variable-height element illustrated in a broken line;
- figure 5 is a vertical-elevation section of the weir performed along trace line V-V of figure 3, with the lower position of the second variable-height element illustrated in a broken line.

The hydraulic weir of the invention is of a type that comprises a structure 1, normally made of concrete, which is located across a whole bed of a stream 2 or a river having a prevalently torrential regime; like weirs of known type, the weir of the invention is located in a bed of a river with the aim of regulating a flow thereof and preventing removal of material from the stream bed. The weir exhibits a profile and a threshold 3 that are defined by the hydraulic functions which the weir is designed for. A drop is created between upstream and downstream of the weir, i.e. a hydraulic head, which in this type of realization can be of several metres.

To exploit the drop with the aim of producing hydro-electric energy, the weir further comprises a loading basin 4 the function of which is to convey at least a part of the water which flows in the stream to a hydro-electric station located downstream of the weir; the basin is located by a side of and in proximity of the weir and is preferably fashioned downstream of the weir. The upstream edge of the basin is advantageously constituted by a part of the weir.

The basin is provided with a protection grid 5 which is arranged between the upstream edge and the downstream edge of the basin and enables passage of the water while preventing passage of foreign bodies; the passage openings of the grid are defined by the maximum dimension of the foreign bodies that the grid will let pass. In proximity of the bottom of the downstream edge of the basin, and at a slightly higher level with respect to the bottom, a conduit is usually provided which carries the water to a turbine that is able to produce electric energy, the turbine being downstream of the basin and exploiting the hydraulic head existing between the water surface upstream of the weir and the level at which the turbine is located.

This type of hydraulic works can advantageously be used when the drop between upstream and downstream of the weir enables a production of electrical energy which compensates for the costs of the plant in a reasonable time span.

As is known, differently to dykes, which can be considerably high as they enable creation upstream of hydraulic basins (with flooding of the terrains involved) and do not enable the water to flow over the dyke, weirs must enable the water to pass over the threshold of the weir and, even in the case of a swell of the stream, must not cause flooding of the terrains upstream or the passage of water at the sides of the weir. The height of the weirs, i.e. the drop obtained from the height, cannot therefore be defined as desired but is dependent on the characteristics of the stream, in particular the predictable swell rhythms of the stream. For this reason it is not always possible to obtain, by means of the weirs, a hydraulic head that is advantageously exploitable for producing electrical energy.

With the improvements that will be described in the following the possibilities of exploiting the hydraulic energy of the streams for the production of electrical energy are increased, without altering the hydraulic functionality of the weir. These improvements are applicable both during the construction of new weirs and, with considerable economic advantages, to existing weirs.

The improvements in question comprise a first height-adjustable element 6 being applied on the threshold 3 of the weir, the height-adjustable element 6 being arranged on the whole threshold of the weir which involves the zone of the weir not occupied by the loading basin. The height of the element 6 with respect to the threshold of the weir is variable on command from a lower position A, in which it does not substantially alter the height of the threshold of the weir, to an upper position B in which it raises the height of the threshold of the weir by a predetermined amount.

In a preferred embodiment the first height-adjustable element 6 comprises a flat wall, normally realized by means of a metal slab of an appropriate thickness, which is hinged to the threshold of the weir and which can be rotated on command from position A to position B and vice versa; the rotation of the flat wall is obtained with means of known type, for example hydraulic jacks. To prevent obstructing the normal flow of the water, and in order to prevent excessive stresses on the wall, the rotation of the wall from position B to position A is carried out in a same direction as the current of the stream water.

It is also possible to realise the first variable-height element 6 with a commanded inflatable and deflatable element, for example an empty flexible tube which can be filled and emptied with a fluid (for example water); an element made in this way is arranged in the lower position A when it is deflated and in the upper position B when it is inflated. This solution, which simple to imagine, is not illustrated in the figures.

The loading basin, which as mentioned is located by a side and downstream of the weir, and exhibits the upstream edge of which advantageously constituted by a part of the weir, exhibits banks facing upstream and downstream at the same height as the threshold of the weir, though the downstream edge can be maintained at a slightly lower height.

The basin comprises two fixed lateral walls 7a the upper edge of which is located at a height that is not lower than a height that the upper edge of the first variable-height element 6 reaches when in position B; the lateral walls 7a are normally realised with concrete or metal structures.

The basin further comprises a second variable-height element 7 which is arranged on the downstream edge of the basin; the height thereof with respect to the threshold of the weir is variable on command, independently of the height change of the first element 6, from a lower position A', in which the height of the downstream edge of the basin is substantially equal to the height of the upstream edge, to an upper position B' in which it raises the height of the downstream edge of the basin to a height that is not lower than the height the upper edge of the first variable-height element 6 reaches when it is in position B.

The second height-variable element 7 is also advantageously realised by means of a flat metal wall which is hinged to the downstream edge of the basin and which can be rotated on command from position A' to position B' and vice versa; in this case too the rotation of the flat wall is obtained with the known-type means, for example with the hydraulic jacks.

The loading basin 4 of the weir of the invention has a rectagular section and is provided with a protection grid 5 which comprises straight bars 5a that are perpendicular to the upstream edges and downstream of the basin and are arranged parallel to one another at a predetermined distance from one another; the distance between the various bars making up the grid, i.e. the slits determining the rectangular passage openings existing between the bars of the grid, are defined in such a way as to enable passage of foreign bodies of a maximum predetermined size (normally a few centimetres). Also provided is a rake 8, the tines of which are of such shape and dimensions as to pass through the slits existing between the bars 5a of the grid 5; the rake is solidly constrained in rotation to the flat wall of the second variable-height element 7 and is connected to the flat wall of the second element 7 in such a way as to be below the grid 5 when the wall is in the position B' thereof, and above the grid 5 when the wall is in the position A' thereof.

In particular, the rake 8, which is realised using metal bars, is connected to the edge of the flat wall of the second element 7 hinged to the downstream edge of the basin. The rake 8 is arranged upstream of the second element 7, such as to be at the position of the grid, and exhibits an angle of an entity of greater than 90° with respect to the element; in this way, when the element 7 is in position B (which is about vertical), the tines of the rake are below the bars of the grid. In any case the tines do not prevent the normal flow of the water through the grid.

The foreign bodies (normally gravel of small dimensions) which pass through the grid are collected on the bottom of the basin, from which they are periodically removed, and do not enter the conduit which leads to the turbine since, as mentioned, the mouth of the conduit is at a slightly higher level than the bottom of the basin and can be protected by a further protection grid.

The functioning of the weir of the invention is extremely simple and is described in the following.

With reference to the position of the variable-height elements, both of them are maintained in the upper position thereof B and B' when the flow of the stream is minimal or in any case of small entity. In this way the height of the free surface of the water upstream of the weir rises and thus the hydraulic head available for the production of electrical energy is increased. In this conformation the water does not pass (or only minimally passes) above the variable-height elements, but is conveyed to the loading basin and from there, passing through special conduits, reaches the turbine that generates electrical energy. Naturally the height of the variable-height elements is maintained such as not to raise the height of the free water surface upstream above the height that is admitted at times of high stream flow; this height is normally in the order of 1 to 2 metres. The advantage of the weir of the invention is however that it constantly guarantees, even when the water flow is low, a head and a flow of water that are such as to make it possible to maximise the production of electrical energy. It should also be noted that for the variable-height elements there exist no problems of hydraulic seal since a certain quantity of water must in any case always pass from upstream to downstream of the weir; it is indeed advantageous to include passages for infiltration of the water both below and by the sides of the variable-height elements in order to enable the flow of the water, including at times when the turbine is not functioning.

With an increase in the water flow of the stream, the height of the first variable-height element can be progressively reduced, by means of a rotation thereof from position B towards position A, in such a way as to enable the water to flow over the element and not to cause problems of flooding or erosion of the flanks upstream of the weir. At full flow the first variable-height element is brought into the lower position A thereof such as to reset the design height of the weir threshold and thus enable regular overflow conditions of the water from the weir; in these conditions there are clearly no problems of water flow and head at the turbine as there exists a considerable water flow the height of which considerably exceeds the height of the weir threshold.

With the structure of the weir of the invention, the problem of the cleanliness of the protection grid of the loading basin is also solved; the grid is blocked by both non-floating bodies (generally stones) which do not pass through the grid and deposit on it, and floating bodies, such as branches, shrubs, trunks and the like, which enter the loading basin and are retrained on the grid or indeed get stuck between the passage openings of the grid.

When, periodically, a blockage is found in the passage openings of the grid, the second variable-height element is rotated from the upper position to the lower position; during this rotation the tines of the rake cross the existing slits on the grid, freeing them from foreign bodies present above the grid or blocked in the slits of the grid. The flow of water that is generated conveys the foreign bodies downstream and performs the cleaning of the grid. After this operation, which lasts several minutes, the second variable-height element is returned into the upper position thereof in order to return to the normal functioning thereof.

## Claims

1. An improved hydraulic weir, of a type comprising: a structure (1) placed across a whole bed of a stream (2) and provided with a threshold (3); a rectangular-section loading basin (4) for conveying at least a part of the water flowing in the stream to a hydro-electric station located downstream of the weir, which loading basin is located by a side of the weir and is provided with a protection grid (5) which is arranged between an edge upstream and an edge downstream of the basin and enables passage of the water and prevents passage of foreign bodies; the loading basin exhibits the edges thereof facing upstream and downstream at a same height as the threshold of the weir and comprises two fixed lateral walls (7a) having an upper edge at a height that is not lower than a maximum height of the threshold of the weir; **characterised in that** it comprises a second variable-height element (7) arranged on the downstream edge of the basin, a height of which is variable on command from a lower position (A'), in which the height of the downstream edge of the basin is substantially the same as the height of the upstream edge thereof, to an upper position (B') in which it raises the height of the downstream edge of the basin; the protection grid (5) comprises straight bars (5a) which are perpendicular to the edges upstream and downstream of the basin and are arranged parallel to one another at a predetermined distance from one another; a rake (8) is provided, tines of which have shapes and dimensions such as to be able to pass through slits existing between the bars (5a) of the grid (5), which is solid in motion with the second variable-height element (7) and is connected to the second element (7) in such a way as to be located below the grid (5) when the second element (7) is in position (B') thereof, and above the grid (5) when the second element (7) is in position (A') thereof.

2. The weir of claim 1, **characterised in that**: a first variable-height element (6) is provided on the threshold (3) of the weir, which element (6) is arranged on the whole threshold of the weir which involves the zone of the weir not occupied by the loading basing and a height of which element (6) with respect to the threshold of the weir is variable on command from a lower position (A), in which the element (6) does not alter the height of the threshold of the weir, to an upper position (B), in which it raises the height of the threshold of the weir by a predetermined amount; the fixed lateral walls (7a) of the basin have the upper edge at a height that is not lower than a height which the upper edge of the first variable-height element (6) reaches when the element (6) is in position (B); the height of the second variable-height element (7) with respect to the threshold of the weir is variable on command, independently of the variation in height of the first element (6), from the lower position (A') to the upper position (B') in which it raises the height of the edge downstream of the basin to a height which is not lower than the height which the upper edge of the first variable height element (6) reaches when in position (B).

3. The weir of claim 2, **characterised in that** the first variable-height element (6) comprises a flat wall which is hinged to the threshold of the weir and which, via motor means of known type, can be rotated on command from position (A) to position (B) and vice versa.

4. The weir of claim 1, **characterised in that** the second variable-height element (7) comprises a flat wall which is hinged to the downstream edge of the basin and which, via motor means of known type, can be made to rotate on command from position (A') to position (B') and vice versa.

5. The weir of claim 4, **characterised in that** the rake (8) is connected to the edge of the flat wall of the second element (7) hinged to the downstream edge of the basin, and is arranged upstream of the wall with an angle of greater than 90° with respect to the wall.

6. The weir of claim 2, **characterised in that** the first variable-height element (6) comprises an inflatable and deflatable element on command, which is arranged in the lower position (A) when deflated, and in the upper position (B) when inflated.
